# FASCICULE DE BREVET EUROPEEN

(11) **EP 2 906 366 B1**
(45) Date de publication et mention de la délivrance du brevet: **12.10.2016**
(21) Numéro de dépôt: 13759803.3
(22) Date de dépôt: 07.08.2013
(51) Int. Cl.: B07C 3/02

(54) **PROCÉDÉ DE TRAITEMENT DE COLIS ET CENTRE LOGISTIQUE DE TRAITEMENT DE COLIS**
VERFAHREN ZUM BEARBEITEN VON PAKETEN UND ENTSPRECHENDES LOGISTIKZENTRUM
METHOD FOR PROCESING PACKAGES AND ACCORDING LOGISTICS CENTRE

(30) Priorité: 11.10.2012 FR 1259699
(43) Date de publication de la demande: 19.08.2015
(73) Titulaire: Solystic, 92220 Bagneux (FR)
(72) Inventeur: MIETTE, Emmanuel, F-95210 Saint Gratien (FR); CHIROL, Luc, F-75016 Paris (FR)
(74) Mandataire: Prugneau, Philippe
(86) Numéro de dépôt international: PCT/FR2013/051904
(87) Numéro de publication internationale: WO 2014/057182

(56) Documents cités:
- WO-A1-01/10574
- WO-A1-03/054688
- US-A- 3 167 192
- US-A- 5 990 437

## Description

### Domaine technique

L'invention concerne le traitement de colis, en particulier des colis postaux, à savoir leur réception dans un centre logistique de traitement, leur tri et organisation en vue de leur expédition selon une séquence de distribution.
cf. par exemple WO-A-03/054688.

L'invention concerne plus particulièrement un procédé de traitement de colis dans un centre logistique de traitement de colis, comprenant les étapes consistant à déposer des colis au niveau d'un point de dépose du centre, déplacer les colis et les ranger de manière organisée sur différents segments d'une zone de rangement du centre correspondants chacun à une expédition des colis, puis transférer les colis en attente de chargement de chaque segment vers un point de chargement.

L'invention concerne également un centre logistique de traitement de colis comprenant au moins un point de dépose/chargement des colis et une zone de rangement destinée à recevoir des colis en attente de chargement et divisée en différents segments correspondants chacun à une expédition des colis.

### Technique antérieure

Jusqu'à présent, pour expédier des colis postaux via un centre d'échange, on utilise des convoyeurs du type bandes à rouleaux fonctionnant suivant un circuit fermé. Plus particulièrement des colis postaux, en provenance de points de collecte dépendant du centre en question ou d'autres centres, sont déposés sur un convoyeur de ce type pour être déplacés en série le long d'une sorte de stand rectiligne devant lequel se tiennent des agents de manutention affectés chacun par exemple à une expédition, par exemple une tournée de facteur au cours de laquelle les colis postaux sont distribués selon l'ordre préétabli d'un plan de distribution. Chaque agent de manutention vient donc prélever un à un chaque colis postal pour constituer son expédition. Le prélèvement des colis postaux est réalisé au fur à mesure que ceux-ci passent devant le stand. L'agent de manutention range ces colis postaux sur un segment de la zone de rangement s'étendant en général transversalement au stand. Ensuite chaque agent de manutention transporte les colis postaux de leur segment vers leur point de chargement pour les charger dans un moyen de transport permettant d'assurer la distribution de colis, par exemple un camion.

Ce procédé de traitement requiert, de la part des agents de manutention, une connaissance approfondie des expéditions et en particulier des différentes séquences de distribution. Toute erreur dans l'organisation des colis postaux peut générer des manipulations supplémentaires, cause de la détérioration de ces colis postaux. Ce procédé de traitement ne permet pas l'optimisation de l'utilisation de la zone de rangement. De plus, ce procédé de traitement empêche une reconfiguration dynamique des expéditions en fonction par exemple des volumes à distribuer. Enfin, il implique la présence des agents de manutention pendant que les colis sont déchargés sur le convoyeur.

### Exposé de l'invention

Le but de l'invention est de remédier à ces inconvénients en proposant un procédé de traitement de colis et un centre logistique de traitement de colis permettant de limiter les manipulations des colis en optimisant le rangement dans le centre et l'organisation de leur chargement en fonction de leur séquence de distribution.

A cet effet, l'invention a pour effet un procédé de traitement de colis dans un centre logistique de traitement de colis, comprenant les étapes consistant à déposer des colis au niveau d'un point de dépose du centre, déplacer les colis et les ranger de manière organisée sur différents segments d'une zone de rangement du centre correspondants chacun à une expédition des colis, puis transférer les colis en attente de chargement de chaque segment vers un point de chargement, caractérisé en ce que pour déplacer et ranger les colis, on utilise des étagères sur pied de type gigogne de formats (hauteurs et largeurs) différents, aptes à s'encastrer en se superposant, et des navettes motorisées autonomes aptes à accoster chaque étagère que l'on commande individuellement à distance en circulation libre guidée, et en ce que :
- on dépose chaque colis sur une étagère de format connu accostée et motorisée par une navette,
- on identifie la destination de chaque colis,
- on utilise un plan d'expédition associant chaque destination de colis à une expédition pour attribuer à l'étagère portant le colis un emplacement spécifique d'un segment tenant compte du format de l'étagère pour permettre la superposition des colis, et on commande le déplacement de la navette vers l'emplacement spécifique de sorte à stocker les colis côte à côte et en superposition,
- on utilise un plan de distribution précisant la séquence de distribution des colis au sein d'une même expédition pour commander l'accostage par une navette de chaque étagère portant un colis et le transfert du colis de la zone de rangement vers le point de chargement.

Par traitement, on entend de façon générale la réception, le tri et le rangement ordonné des colis en vue de leur distribution ou répartition ultérieure. L'idée à la base de l'invention est donc d'utiliser des étagères de type gigogne permettant de ranger les colis en superposition de façon à optimiser l'encombrement des colis dans le centre et l'organisation de leur chargement en vue de leur distribution selon une séquence préétablie. L'invention est tout particulièrement destinée au traitement de colis postaux mais peut s'appliquer aussi au traitement d'autres types d'objets nécessitant une logistique de tri et de rangement avant une distribution ou répartition. Ces autres objets peuvent être par exemple des bagages à traiter dans un aéroport, lesquels bagages doivent être déchargés puis répartis dans différents avions. Le terme colis au sens de l'invention n'est donc pas limité pour désigner des colis postaux.

Le procédé de traitement selon l'invention peut avantageusement présenter les particularités suivantes :
- on utilise des étagères comportant chacune un plateau adapté pour porter un colis unique, et un cadre adapté pour laisser passer une navette sous le plateau avec possibilité d'accostage de la navette au cadre sur commande, le cadre étant adapté pour laisser passer une étagère de hauteur et largeur différentes en-dessous ou au-dessus du plateau et permettre la superposition des colis. Le rangement dans la zone de rangement peut ainsi être optimisé tout en permettant la localisation individuelle de chaque colis en vue de son chargement ;
- on utilise des étagères possédant chacune un identifiant unique, on constitue une table d'association entre chaque identifiant unique d'étagère et la destination du colis qu'elle porte pour permettre la localisation de chaque colis dans le centre à partir des identifiants unique d'étagère, et on constitue une table d'attribution entre chaque identifiant unique d'étagère et l'emplacement spécifique attribué ;
- avant le déplacement de la navette vers la zone de rangement, si nécessaire on commande le déplacement de la navette chargée d'un colis du point de dépose vers une zone de service du centre dans laquelle on réalise au moins l'une des opérations choisie dans le groupe comprenant au moins apposer une étiquette sur le colis, peser le colis, contrôler le colis, réparer le colis, effectuer un contrôle de sécurité sur le colis ;
- on utilise autant d'étagères qu'il y a de colis à trier ;
- on forme une image numérique de chaque colis et on reconnait, à partir de l'image numérique, la destination du colis.

L'invention s'étend à un centre logistique de traitement de colis comprenant au moins un point de dépose/chargement des colis et une zone de rangement destinée à recevoir des colis en attente de chargement et divisée en différents segments correspondants chacun à une expédition des colis, caractérisé en ce qu'il comporte des étagères sur pied de type gigogne de formats (hauteurs et largeurs) différents, aptes à s'encastrer en se superposant, et des navettes motorisées autonomes aptes à accoster chaque étagère, des moyens d'identification de la destination de chaque colis, une unité centrale de contrôle/commande apte à commander individuellement à distance les navettes en circulation libre guidée et comportant un plan d'expédition des colis associant chaque destination de colis à une expédition et un plan de distribution précisant la séquence de distribution des colis au sein d'une même expédition, et les colis étant stockés côte à côte et en superposition dans chaque segment.

Selon un mode de réalisation avantageux du centre logistique de traitement de colis selon l'invention, chaque étagère comporte un plateau adapté pour porter un colis unique, et un cadre adapté pour laisser passer une navette sous le plateau avec possibilité d'accostage de la navette au cadre sur commande de l'unité centrale, le cadre étant adapté pour laisser passer une étagère de hauteur et largeur différentes en-dessous ou au-dessus du plateau pour permettre la superposition des colis.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- les figures 1 et 2 sont des schémas du centre logistique de traitement de colis selon l'invention illustrant les déplacements des navettes, des étagères gigognes et des colis lors des étapes du procédé de traitement selon l'invention, respectivement les étapes de dépose et déplacement des colis vers la zone de rangement, et les étapes de transfert en vue du chargement des colis, les flèches illustrant le sens des déplacements ;

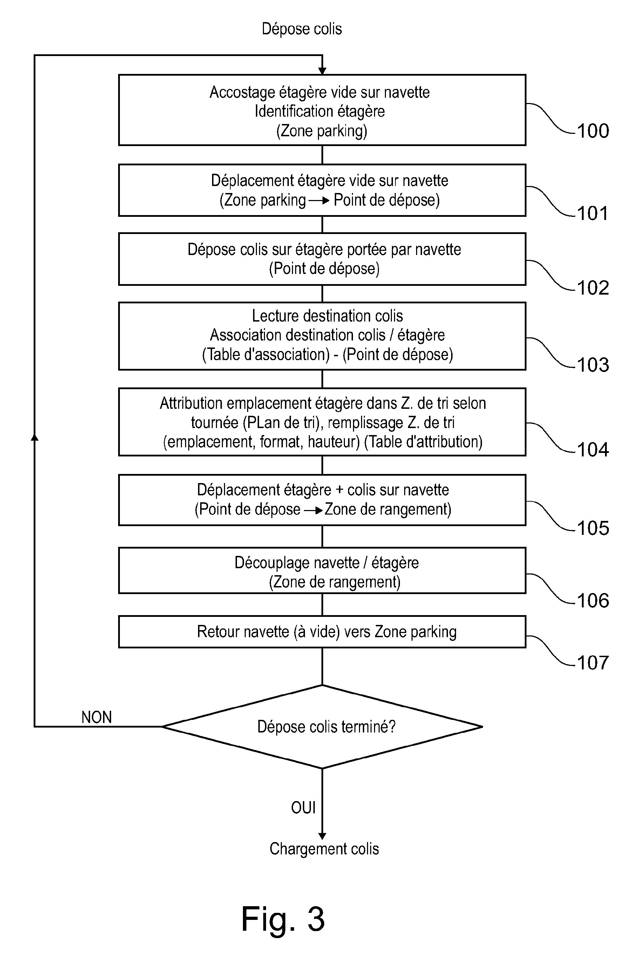

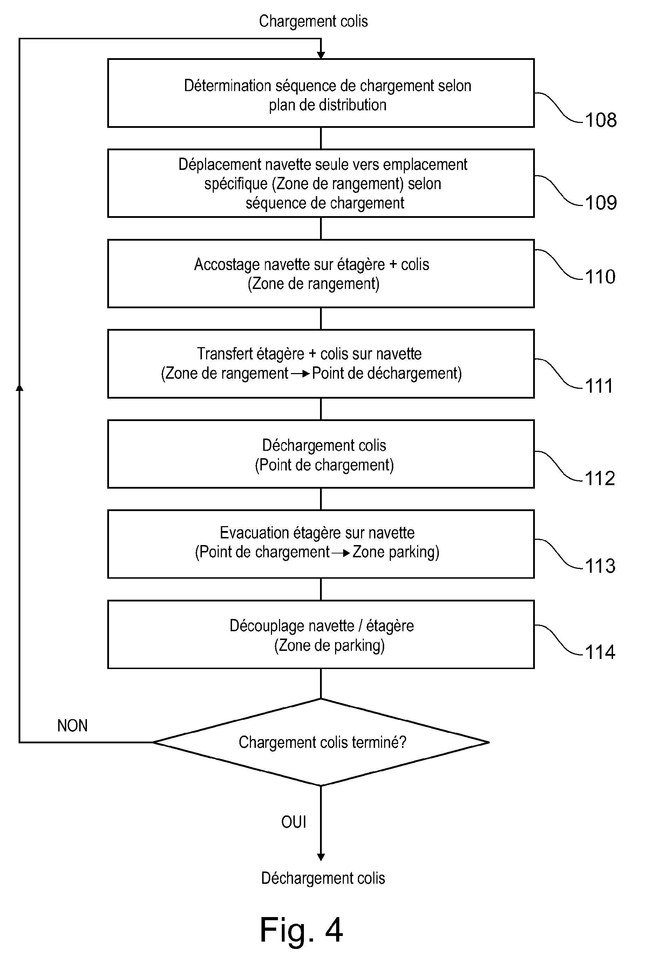

- les figures 3 et 4 sont des organigrammes détaillant les étapes du procédé de traitement respectivement des figures 1 et 2 ;
- les figures 5 et 6 sont des vues en perspective illustrant l'accostage d'une étagère vide par une navette ;
- les figures 7 et 8 sont des vues en perspective illustrant le rangement superposé de deux étagères portant des colis ;
- les figures 9 et 10 sont des vues respectivement en perspective et de dessus de la zone de rangement organisée en segments d'un centre logistique de traitement de colis selon l'invention, illustrant le rangement des étagères portant des colis disposés côte à côte et superposés.

### Description d'un mode de réalisation

De manière générale, l'invention porte donc sur un procédé de traitement de colis et sur un centre logistique de traitement de colis permettant la mise en oeuvre de ce procédé. Tel que détaillé ci-après, les colis peuvent être des colis postaux et le centre un centre postal. Les colis peuvent également être par exemple des bagages et le centre un lieu destiné à l'organisation du chargement des bagages dans un moyen de transport tel que par exemple un avion, de sorte que lors du débarquement, la récupération des bagages puisse se dérouler selon une séquence prédéterminée. Les colis peuvent également être issus de la préparation de commandes en sortie d'un entrepôt logistique et le centre être un lieu destiné à l'expédition de ces commandes

La description qui suit est centrée de manière non limitative sur des colis postaux et sur un centre logistique de traitement de colis postaux.

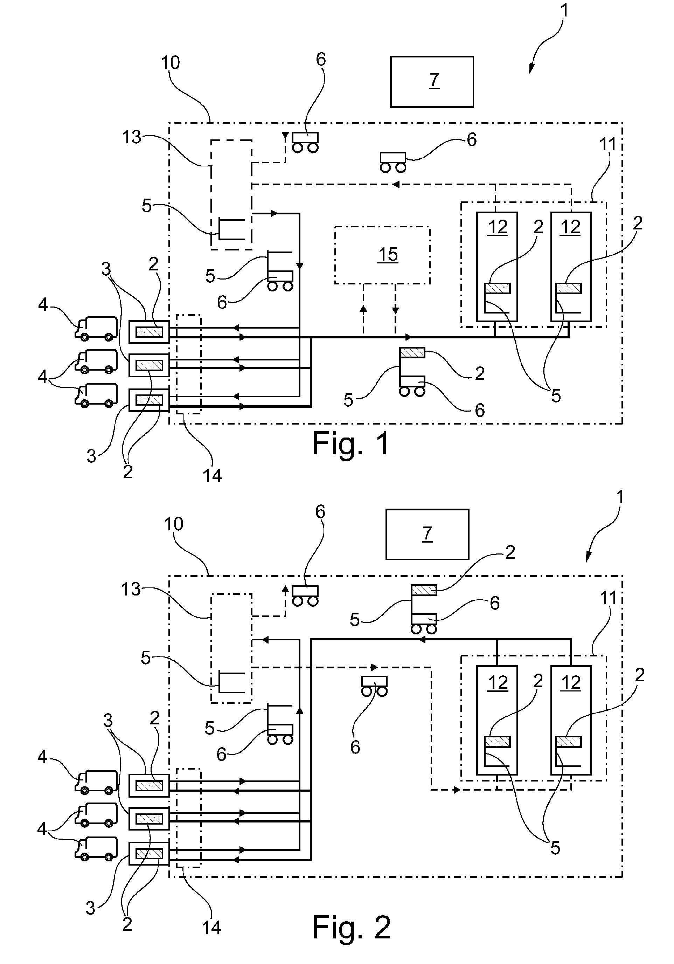

De manière connue, le centre 1 logistique de traitement de colis 2 illustré par les figures 1 et 2, comporte une plateforme 10 pourvue de points 3 de dépose et de chargement des colis 2 accessibles par des moyens de transport, tels que par exemple des camions 4 destinés à amener et à remporter les colis 2. Dans l'exemple illustré, les points 3 de dépose, sont au nombre de trois, disposés côte à côte, chacun combiné à un point 3 de chargement. Les points 3 de dépose peuvent bien entendu être dissociés des points 3 de chargement, et/ou être prévus en plus grand nombre, et/ou être disposés selon une autre configuration que celle illustrée.

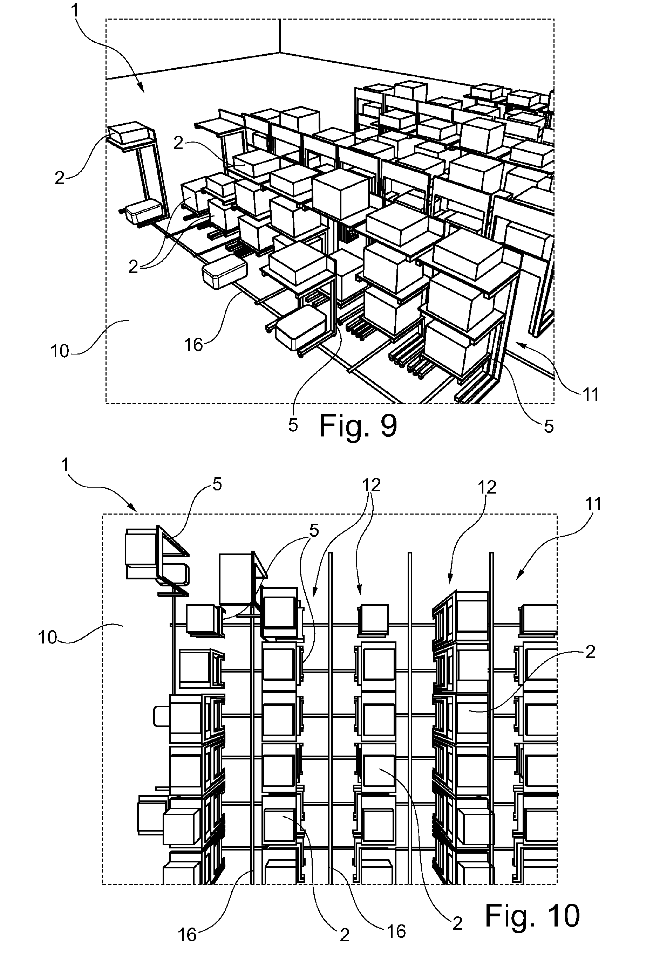

La plateforme 10 comprend notamment une zone de rangement 11 destinée à recevoir des colis 2 déchargés et en attente de chargement. Cette zone de rangement 11 est divisée en plusieurs segments 12, en deux segments 12 dans l'exemple illustré sur les figures 1 et 2. Les figures 9 et 10 illustrent une zone de rangement 11 comportant un nombre supérieur de segments 12 et sur lesquelles, seule une partie des références relatives aux colis 2, étagères 5 et segments 12 sont repérées.

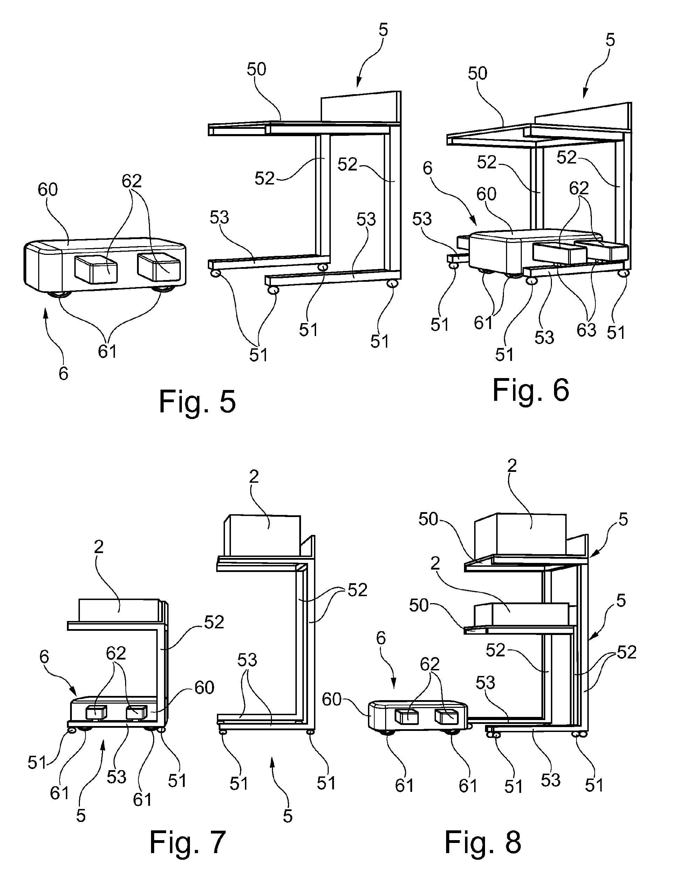

Le centre 1 selon l'invention comporte une zone parking 13 dans laquelle sont stockées des étagères 5. Ces étagères 5, détaillées sur les figures 5 à 8, sont sur pied et de type gigogne. Chaque étagère 5 comporte un plateau 50 adapté en dimensions pour porter un colis 2 unique. Le plateau 50 est solidaire d'un cadre porté par des roues 51. Ce cadre comporte deux montants verticaux 52 solidaires en leurs extrémités basses de deux montants horizontaux 53, parallèles entre eux et pourvus des roues 51. Les étagères 5 présentent entre elles des hauteurs et largeurs différentes. Dans l'exemple illustré, les étagères 5 présentent ainsi trois formats (couple hauteur-largeur) différents : petit format, format moyen, grand format. De plus, sous le plateau 50, le cadre ne comporte aucune traverse reliant entre eux les montants verticaux 52 ou les montants horizontaux 53. Ainsi, et comme illustré par les figures 7 et 8, une étagère 5 de petit format ou de format moyen peut passer sous une étagère 5 de format moyen ou de grand format sous laquelle elle peut être rangée. Il est ainsi possible de ranger des étagères 5 de formats différents en un même emplacement. Dans l'exemple illustré trois étagères 5 ayant chacune l'un des trois formats différent des deux autres peuvent être rangées en un même emplacement, encastrées et superposées les unes aux autres. Par ailleurs, les navettes décrites plus loin sont conçues pour être aptes à passer sous toutes les étagères 5, quel que soit le format de chaque étagère 5. Il est bien entendu possible d'utiliser un nombre supérieur de formats d'étagères 5. Lorsqu'elles ne sont pas stockées dans la zone parking 13, les étagères 5 peuvent être en attente dans la zone de rangement 11 ou être en circulation sur la plateforme 10. Dans l'exemple illustré, les étagères 5 sont mobiles en elles-mêmes par le biais de leurs roues 51. Selon une variante de réalisation non représentée, les étagères ne comportent pas de roue et sont déplacées, portées par une navette motorisée décrite ci-après.

Le centre 1 selon l'invention comporte également des navettes 6, par exemple stockées dans la zone parking 13 avec les étagères 5 ou dans toute autre zone parking ou de maintenance. Lorsqu'elles ne sont pas stockées, les navettes 6 sont en circulation sur la plateforme 10. La largeur de la navette 6 est inférieure à la distance séparant les montants horizontaux 53 de l'étagère 5 de petit format. Ainsi, et comme illustré par les figures 6 et 7, la navette 6 peut passer entre les montants horizontaux 53 de chaque étagère 5, que celle-ci porte ou non un colis 2 et quel que soit son format. Comme détaillé sur les figures 5 à 8, chaque navette 6 comporte un bloc moteur 60 porté par des roues motrices 61 commandées par une unité centrale 7 de contrôle/commande décrite plus loin. Le bloc moteur 60 comporte également des bras 62 extensibles latéralement du bloc moteur 60 et dont le déploiement est commandé par l'unité centrale 7 de contrôle/commande. Ces bras 62 sont pourvus de moyens de préhension 63 (en partie visibles sur la figure 6) aptes à s'accrocher aux montants horizontaux 53 des étagères 5. Ces moyens de préhension 63 sont par exemple des moyens magnétiques qui coopèrent avec des montants horizontaux 53 métalliques des étagères 5. Les bras 62 peuvent par ailleurs être déployés au-dessus des montants horizontaux 53, et sur une longueur suffisante pour atteindre les montants horizontaux 53 de l'étagère 5 de grand format. Ainsi, les bras 62 peuvent s'accommoder des différentes largeurs d'étagères 5 et accoster simultanément une étagère 5 unique ou plusieurs étagères 5 de formats différents. Lorsque les étagères 5 ne comportent pas de roue, elles sont rendues mobiles par les roues motrices 61 des navettes 6. Chaque étagère 5 couplée à une navette 6 est ainsi motorisée et peut être déplacée, seule ou avec d'autres étagères 5, à vide ou chargée de son colis 2. Chaque navette 6 est autonome et comprend des capteurs de positionnement, une alimentation et un calculateur lui permettant notamment d'optimiser ses déplacements et d'éviter les collisions avec les obstacles et autres navettes 6. Les navettes 6 sont individuellement commandées à distance par l'unité centrale 7 de contrôle/commande schématisée sur les figures 1 et 2 et dont le fonctionnement est décrit plus loin.

Le centre 1 selon l'invention comporte en outre une zone d'identification 14 (visible sur la figure 1) au niveau de laquelle les colis 2 déchargés sont identifiés. Le format de l'étagère 5 portant le colis 2 peut également être détecté au niveau de cette zone d'identification 14, ou préalablement déterminé par tout moyen adapté. Les étagères 5 peuvent par ailleurs être identifiées de manière unique. Dans ce cas, l'identité de chaque étagère 5, en plus de son format, peut être détectée au niveau de cette zone d'identification 14.

Le centre 1 selon l'invention comporte une unité centrale 7 de contrôle/commande apte à superviser le fonctionnement du centre 1 et en particulier à commander à distance les déplacements des navettes 6. L'unité centrale 7 est apte à recevoir des informations relatives à l'identification des étagères 5 utilisées, la destination des colis 2 et le positionnement de chaque navette 6. La gestion des déplacements des navettes 6 par l'unité centrale 7 permet d'optimiser leur flux de circulation et d'éviter toute collision. L'unité centrale 7 comporte un plan d'expédition, dont un exemple est donné ci-après, répartissant les destinations des différents colis 2 en différentes expéditions préétablies. Une expédition correspond par exemple à un quartier d'une ville dans lequel les colis seront distribués.

**Plan d'expédition**

| | |
|---|---|
| Expédition i | Destination i |
| | ... |
| | Destination n |
| ... | ... |
| Expédition n | Destination i' |
| | ... |
| | Destination n' |

Ainsi, en fonction des informations collectées dans la zone d'identification 14 sur la destination des colis 2 déposées, l'unité centrale 7 organise, comme détaillé plus loin, le rangement des étagères 5 par expédition dans les segments 12 de la zone de rangement 11.

L'unité centrale 7 comporte également un plan de distribution, dont un exemple est donné ci-après, organisant la séquence de distribution de chaque destination d'une même expédition pour que la distribution des colis 2 se déroule de manière optimale par rapport au trajet du camion 4 et à la façon dont il est chargé.

**Plan de distribution**

| | |
|---|---|
| Destination i | Ordre i |
| ... | ... |
| Destination n | Ordre n |

Ainsi, une fois tous les colis 2 rangés, l'unité centrale 7 organise leur récupération selon ce plan de distribution, de sorte à optimiser le chargement des camions 4 en vue de la distribution selon la séquence prédéterminée et ainsi faciliter le travail de l'agent de manutention.

Le centre 1 selon l'invention comporte enfin une zone de service 15 au niveau de laquelle les colis 2 peuvent, de manière optionnelle, être pesés, étiquetés ou réparés. Comme détaillés plus loin, les colis 2 sont acheminés vers la zone de service 15, portés par une étagère 5 motorisée par une navette 6. Un contrôle de sécurité des colis 2 peut également être réalisé au niveau de cette zone de service 15.

Le centre 1 selon l'invention permet de mettre en oeuvre le procédé de traitement de colis 2 décrit ci-après, en optimisant le rangement de la zone de rangement 11 ainsi que le chargement des colis 2 dans les camions 4 en vue de leur distribution.

Le procédé de traitement commence à l'arrivée d'un colis 2, par exemple amené par camion 4 et déposé en l'un des points 3 de dépose. L'arrivée du camion 4 peut être détectée automatiquement par tout moyen connu, ou signalée par l'agent de manutention, par exemple au moyen d'un interrupteur (non représenté) prévu à cet effet au niveau du point 3 de dépose.

L'unité centrale 7 commande alors l'étape d'accostage 100 d'une étagère 5 vide stockée dans la zone de rangement 11 au moyen d'une navette 6 préalablement stockée sous les étagères 5 dans la zone de rangement 11, ou dans une zone parking distincte dédiée aux navettes 6. Pour accoster l'étagère 5, l'unité centrale 7 commande le déploiement des bras 62 d'une largeur correspondant au format de l'étagère 5 à accoster. Le format de l'étagère 5 à accoster peut être décidé à l'avance par l'unité centrale 7 qui déplace alors la navette 6 jusqu'à l'une ou l'autre des étagères 5 identifiées de ce format. Selon un autre mode de fonctionnement, la navette 6 accoste une étagère 5 de manière plus ou moins aléatoire et reconnait, à l'accostage, le format de cette étagère 5, informant en retour l'unité centrale 7. L'étagère 5 est identifiée et son format est connu. L'information concernant le format de l'étagère 5 sera ultérieurement utilisée par l'unité centrale 7 pour optimiser le rangement dans la zone de rangement 11. L'identification de l'étagère 5 et en particulier la reconnaissance de son format peut également être réalisée ultérieurement en amont de la zone de rangement 11.

Ensuite, l'unité centrale 7 commande le déplacement 101 de l'étagère 5 vide de la zone parking 13 vers le point 3 de dépose. L'agent de manutention peut alors déposer 102 un colis 2 déchargé du camion 4 sur l'étagère 5 motorisée par la navette 6. Chaque colis 2 est ainsi placé individuellement sur une étagère 5 motorisée par une navette 6 commandée par l'unité centrale 7. La présence du colis 2 sur l'étagère 5 est détectée automatiquement, par exemple par variation de la charge portée par la navette 6, ou par une cellule photoélectrique (non représentée) détectant la présence de tout objet sur le plateau 50 de l'étagère 5 La présence du colis 2 sur l'étagère 5 peut également être signalée par l'agent de manutention, par exemple au moyen d'un interrupteur (non représenté). La destination du colis 2, par exemple indiquée sur une étiquette portée par le colis 2, est lue 103 et identifiée par tout moyen de lecture et reconnaissance OCR adapté. L'identification de l'étagère 5 peut également être réalisée pendant la lecture de la destination du colis 2. L'information de la destination du colis 2 est transmise à l'unité centrale 7 qui, par le biais d'une table d'association, dont un exemple est donné ci-après, associe 103 chaque destination de colis 2 à l'identification de l'étagère 5 qui le porte, ou au moins à son format.

**Table d'association**

| | |
|---|---|
| Destination i | Etagère i |
| ... | ... |
| Destination n | Etagère n |

Ainsi, à tout moment, l'unité centrale 7 sait où est chaque colis et le format de l'étagère 5 qui le porte.

L'unité centrale 7 attribue 104 alors un emplacement spécifique d'un segment 12 de la zone de rangement 11 au colis 2 déposé, définissant ainsi une table d'attribution, dont un exemple est donné ci-après.

**Table d'attribution**

| | |
|---|---|
| Etagère i | Emplacement i (Zone de rangement) |
| ... | ... |
| Etagère n | Emplacement n (Zone de rangement) |

L'attribution 104 de l'emplacement spécifique est réalisée en tenant compte de l'expédition à laquelle le colis 2 est destiné au moyen du plan d'expédition, du format de l'étagère 5 portant le colis 2 connu par la table d'association et du remplissage de la zone de rangement 11, à savoir l'occupation de chaque emplacement spécifique par des étagères 5 de tel ou tel format. De manière optimale, chaque segment 12 correspond à une expédition. Une fois l'emplacement spécifique attribué, l'unité centrale 7 commande le déplacement 105 de la navette 6 concernée vers l'emplacement spécifique attribué, au niveau duquel l'étagère 5 est ensuite découplée 106 de la navette 6, laissant en place l'étagère 5 et le colis 2 qu'elle porte sur l'emplacement spécifique. Selon l'occupation préalable de l'emplacement spécifique, le colis 2 nouvellement rangé peut se trouver en-dessous et/ou au-dessus d'un autre colis 2, tel qu'illustré par les figures 9 et 10. L'encastrement des étagères 5 et la superposition des colis 2 permettent d'optimiser le rangement de la zone de rangement 11. Comme schématisé sur ces mêmes figures 9 et 10, un marquage au sol 16 destiné à guider les navettes 6 peut faciliter le rangement des étagères 5 dans la zone de rangement 11.

Avant le transfert 105 vers la zone de rangement 11, l'unité centrale 7 peut guider la navette 6 vers une zone de service 15 où le colis 2 pourra par exemple être pesé, contrôlé, réparé, pourvu d'une étiquette. Toute autre opération peut être envisagée au niveau de la zone de service 15, par exemple préciser manuellement la destination d'un colis 2 dont la détermination est imprécise.

Après le découplage 106 entre la navette 6 et l'étagère 5, l'unité centrale 7 commande le retour 107 de la navette 6 à vide, soit vers la zone parking 13, soit vers le point 3 de dépose pour prendre en charge une nouvelle étagère 5 portant un colis 2.

La dépose est poursuivie jusqu'à ce que le camion 4 soit vide, tout son chargement ayant été traité.

Une fois tous les colis 2 déposés, le chargement des colis 2 dans les camions 4 en vue de leur expédition peut être réalisé. Ce chargement peut être réalisé dans la foulée ou après un temps d'attente. Pour ce faire, l'unité centrale 7 affecte un groupe de navettes 6 au chargement des colis de chaque destination dans un ou plusieurs camions 4 et organise et détermine 108 une séquence de chargement de sorte que le chargement des camions 4 se fasse selon la séquence de distribution de chaque expédition. Ainsi, lors de l'expédition, les colis 2 seront accessibles au fur et à mesure dans le camion 4, dans l'ordre de leur distribution, sans nécessiter de fastidieuses opérations de recherches de colis 2 ou de déplacement de colis 2 par l'agent de manutention. La distribution des colis 2 est ainsi optimisée, la charge de travail des agents de manutention est réduite et le risque de détérioration des colis est limité.

L'unité centrale 7 commande le déplacement 109 de navettes 6 seules vers chaque emplacement spécifique concerné de la zone de rangement 11. L'unité centrale 7 commande ensuite l'accostage 110 de chaque navette 6 à l'étagère 5 correspondante et le transfert 111 de l'étagère 5 portant le colis 2 de la zone de rangement 11 vers le point 3 de chargement au niveau duquel les colis 2 sont chargés 112 un à un par l'agent de manutention dans le camion 4. Après chargement 112 de chaque colis 2, l'unité centrale 7 commande l'évacuation 113 de l'étagère 5 par la navette 6 qui la transfert vers la zone parking 13 où elle est découplée 114, en attente d'une utilisation ultérieure. La navette 6 peut être placée en attente dans la zone parking 13 ou réutilisée immédiatement pour la dépose ou le chargement d'un autre colis 2 ou pour toute autre opération adaptée. Le chargement des colis 2 est poursuivi jusqu'à ce que l'expédition soit prête dans le camion 4.

Le procédé de traitement et le centre 1 selon l'invention permettent d'atteindre les objectifs précédemment mentionnés. Ils permettent de faciliter le stockage provisoire des colis 2 avant leur chargement et d'optimiser leur chargement selon la séquence de distribution à réaliser, sans nécessiter de connaissance approfondie des agents de manutention concernant ni l'expédition ni la séquence de distribution elle-même. De plus le procédé de traitement et le centre 1 permettent de gérer simultanément la dépose des colis 2 au niveau de plusieurs points 3 de dépose, et de même, le chargement simultané des colis 2 dans plusieurs camions 4. Le procédé de traitement et le centre 1 selon l'invention permettent en outre une reconfiguration dynamique de l'utilisation de la plateforme 10 en fonction du volume de chaque expédition. Ainsi, les segments 12 sont dédiés aux différentes expéditions selon leur capacité et le volume de chaque expédition. Le procédé de traitement et le centre 1 selon l'invention présentent de plus l'avantage de ne pas nécessiter de convoyeur fixe mais d'utiliser une circulation libre guidée.

Il va de soi que la présente invention ne saurait être limitée à la description qui précède d'un de ses modes de réalisation, susceptible de subir quelques modifications sans pour autant sortir du cadre de l'invention.

## Revendications

1. Procédé de traitement de colis (2) dans un centre logistique (1) de traitement de colis (1), comprenant les étapes consistant à déposer des colis (2) au niveau d'un point (3) de dépose dudit centre (1), déplacer lesdits colis (2) et les ranger de manière organisée sur différents segments (12) d'une zone de rangement (11) dudit centre (1) correspondants chacun à une expédition desdits colis (2), puis transférer lesdits colis (2) en attente de chargement de chaque segment (12) vers un point (3) de chargement, **caractérisé en ce que** pour déplacer et ranger lesdits colis (2), on utilise des étagères (5) sur pied de type gigogne de formats (hauteurs et largeurs) différents, aptes à s'encastrer en se superposant, et des navettes (6) motorisées autonomes aptes à accoster (100) chaque étagère (5) que l'on commande individuellement à distance en circulation libre guidée, et **en ce que** :
- on dépose (102) chaque colis (2) sur une étagère (5) de format connu accostée et motorisée par une navette (6),
- on identifie (103) la destination de chaque colis (2),
- on utilise un plan d'expédition associant chaque destination de colis (2) à une expédition pour attribuer (104) à ladite étagère (5) portant ledit colis (2) un emplacement spécifique d'un segment (12) tenant compte du format de ladite étagère (5) pour permettre la superposition desdits colis (2), et on commande le déplacement (105) de ladite navette (6) vers ledit emplacement spécifique de sorte à stocker lesdits colis (2) côte à côte et en superposition,
- on utilise un plan de distribution précisant la séquence de distribution desdits colis (2) au sein d'une même expédition pour commander l'accostage (110) par une navette (6) de chaque étagère (5) portant un colis (2) et le transfert (111) dudit colis (2) de ladite zone de rangement (11) vers ledit point (3) de chargement.

2. Procédé de traitement selon la revendication 1, **caractérisé en ce que** l'on utilise des étagères (5) comportant chacune un plateau (50) adapté pour porter un colis (2) unique, et un cadre adapté pour laisser passer une navette (6) sous ledit plateau (50) avec possibilité d'accostage de ladite navette (6) audit cadre sur commande, ledit cadre étant adapté pour laisser passer une étagère (5) de hauteur et largeur différentes en-dessous ou au-dessus dudit plateau (50) et permettre la superposition desdits colis (2).

3. Procédé de traitement selon la revendication 1, **caractérisé en ce que** l'on utilise des étagères (5) possédant chacune un identifiant unique, **en ce que** l'on constitue (103) une table d'association entre chaque identifiant unique d'étagère (5) et la destination dudit colis (2) qu'elle porte pour permettre la localisation de chaque colis (2) dans ledit centre (1) à partir desdits identifiants unique d'étagère (5), et on constitue (104) une table d'attribution entre chaque identifiant unique d'étagère (5) et ledit emplacement spécifique attribué.

4. Procédé de traitement selon l'une des revendications précédentes, **caractérisé en ce qu'**avant le déplacement de ladite navette (6) vers ladite zone de rangement (11), on commande le déplacement de ladite navette (6) chargée d'un colis (2) dudit point (3) de dépose vers une zone de service (15) dudit centre (1) dans laquelle on réalise au moins l'une des opérations choisie dans le groupe comprenant au moins apposer une étiquette sur ledit colis (2), peser ledit colis (2), contrôler ledit colis (2), réparer ledit colis (2), effectuer un contrôle de sécurité sur ledit colis (2).

5. Procédé de traitement selon l'une des revendications précédentes, **caractérisé en ce que** l'on utilise autant d'étagères (5) qu'il y a de colis (2) à trier.

6. Procédé de traitement selon l'une des revendications précédentes, **caractérisé en ce que** l'on forme une image numérique de chaque colis et on reconnait, à partir de ladite image numérique, ladite destination dudit colis.

7. Centre logistique (1) de traitement de colis (2) comprenant au moins un point (3) de dépose/chargement desdits colis (2) et une zone de rangement (11) destinée à recevoir des colis (2) en attente de chargement et divisée en différents segments (12) correspondants chacun à une expédition desdits colis (2), **caractérisé en ce qu'**il comporte des étagères (5) sur pied de type gigogne de formats (hauteurs et largeurs) différents, aptes à s'encastrer en se superposant, et des navettes (6) motorisées autonomes aptes à accoster (100) chaque étagère (5), des moyens d'identification (14) de la destination de chaque colis (2), une unité centrale (7) de contrôle/commande apte à commander individuellement à distance lesdites navettes (6) en circulation libre guidée et comportant un plan d'expédition desdits colis (2) associant chaque destination de colis (2) à une expédition et un plan de distribution précisant la séquence de distribution desdits colis (2) au sein d'une même expédition, et **en ce que** lesdits colis (2) sont stockés côte à côte et en superposition dans chaque segment (12).

8. Centre (1) selon la revendication 7, **caractérisé** en ce chaque étagère (5) comporte un plateau (50) adapté pour porter un colis (2) unique, et un cadre adapté pour laisser passer une navette (6) sous ledit plateau (50) avec possibilité d'accostage de ladite navette (6) audit cadre sur commande de ladite unité centrale (7), ledit cadre étant adapté pour laisser passer une étagère (5) de hauteur et largeur différentes en-dessous ou au-dessus dudit plateau (50) pour permettre la superposition desdits colis (2).

## Patentansprüche

1. Verfahren zur Behandlung von Frachtstücken (2) in einem Logistikzentrum (1) zur Behandlung von Frachtstücken (1), umfassend die Schritte Absetzen von Frachtstücken (2) an einem Absetzpunkt (3) des Zentrums (1), Verlagern der Frachtstücke (2) und organisiertes Anordnen derselben auf verschiedenen Segmenten (12) einer Anordnungszone (11) des Zentrums (1), die jeweils einer Abfertigung der Frachtstücke (2) entsprechen, anschließend Transferieren der eine Beladung abwartenden Frachtstücke (2) von jedem Segment (12) zu einem Beladepunkt (3),
**dadurch gekennzeichnet,**
**dass** zum Verlagern und Anordnen der Frachtstücke (2) Regale (5) auf Beinen von schachtelbarer Bauart von unterschiedlichen Formaten (Höhen und Breiten), die in der Lage sind, sich gegenseitig überlagernd zu verschachteln, und autonome motorisierte Beförderungsmittel (6), die in der Lage sind, an jedem Regal (5) anzukoppeln (100) und die individuell auf Entfernung in geführter freier Bewegung gesteuert werden, verwendet werden, und dass
- jedes Frachtstück (2) auf einem Regal (5) von bekanntem Format abgesetzt (102) wird, das durch ein Beförderungsmittel (6) angekoppelt und motorisiert ist,
- das Ziel jedes Frachtstücks (2) identifiziert wird (103),
- ein Abfertigungsplan verwendet wird, der jedes Ziel eines Frachtstücks (2) mit einer Abfertigung verknüpft, um dem das Frachtstück (2) tragenden Regal (5) einen spezifischen Ort eines Segments (12) unter Berücksichtigung des Formats des Regals (5) zuzuordnen (104), um das Überlagern der Frachtstücke (2) zu erlauben, und die Verlagerung (105) des Beförderungsmittels (6) zu dem spezifischen Ort derart gesteuert wird, dass die Frachtstücke (2) nebeneinander und unter-/übereinander gelagert werden,
- ein Verteilplan verwendet wird, der die Verteilfolge der Frachtstücke (2) innerhalb einer selben Abfertigung angibt zum Steuern des Ankoppelns (110) durch ein Beförderungsmittel (6) an jedem ein Frachtstück (2) tragenden Regal (5) und des Transfers (111) des Frachtstücks (2) von der Anordnungszone (11) zu dem Beladepunkt (3).

2. Verfahren zur Behandlung nach Anspruch 1, **dadurch gekennzeichnet, dass** Regale (5) verwendet werden, die jeweils ein Tablett (50), das zum Tragen eines einzigen Frachtstücks (2) ausgebildet ist, und einen Rahmen, der zum passieren lassen eines Beförderungsmittels (6) unter dem Tablett (50) ausgebildet ist, mit der Möglichkeit des Ankoppelns des Beförderungsmittels (6) an dem Rahmen bei Steuerbefehl, aufweisen, wobei der Rahmen ausgebildet ist, um ein Regal (5) von verschiedenen Höhen und Breiten unterhalb oder oberhalb des Tabletts (50) passieren zu lassen und die Überlagerung der Frachtstücke (2) zu erlauben.

3. Verfahren zur Behandlung nach Anspruch 1, **dadurch gekennzeichnet, dass** Regale (5) mit jeweils einer eindeutigen Identifizierung verwendet werden, dass eine Verknüpfungstabelle zwischen jeder eindeutigen Identifizierung eines Regals (5) und dem Ziel des von ihm getragenen Frachtstücks (2) erzeugt wird (103), um die Lokalisierung jedes Frachtstücks (2) in dem Zentrum (1) ausgehend von der eindeutigen Identifizierung des Regals (5) zu erlauben, und eine Zuordnungstabelle zwischen jeder eindeutigen Identifizierung des Regals (5) und dem zugeordneten spezifischen Ort erzeugt wird (104).

4. Verfahren zur Behandlung nach einem der vorhergehenden Ansprüche, **dadurch gekennzeichnet, dass** vor der Verlagerung des Beförderungsmittels (6) zu der Anordnungszone (11) die Verlagerung des mit einem Frachtstück (2) beladenen Beförderungsmittels (6) von dem Absetzpunkt (3) zu einer Bedienzone (15) des Zentrums (1) gesteuert wird, in der wenigstens einer der Schritte ausgeführt wird, ausgewählt aus der Gruppe zumindest umfassend Anbringen eines Etiketts auf dem Frachtstück (2), Wiegen des Frachtstücks (2), Überprüfen des Frachtstücks (2), Reparieren des Frachtstücks (2), Ausführen einer Sicherheitskontrolle an dem Frachtstück (2).

5. Verfahren zur Behandlung nach einem der vorhergehenden Ansprüche, **dadurch gekennzeichnet, dass** genauso viele Regale (5) wie zu sortierende Frachtstücke (2) verwendet werden.

6. Verfahren zur Behandlung nach einem der vorhergehenden Ansprüche, **dadurch gekennzeichnet, dass** ein digitales Bild jedes Frachtstücks erzeugt wird und ausgehend von dem digitalen Bild das Ziel des Frachtstücks erkannt wird.

7. Logistikzentrum (1) zur Behandlung von Frachtstücken (2), umfassend wenigstens einen Absetz-/Beladepunkt (3) der Frachtstücke (2) und eine Anordnungszone (11) zur Aufnahme von die Beladung abwartenden Frachtstücken (2), die in verschiedene, jeweils einer Abfertigung der Frachtstücke (2) entsprechende Segmente (12) unterteilt ist,
**dadurch gekennzeichnet,**
**dass** es Regale (5) auf Beinen von schachtelbarer Bauart von unterschiedlichen Formaten (Höhen und Breiten), die in der Lage sind, sich gegenseitig überlagernd zu verschachteln und autonome motorisierte Beförderungsmittel (6), die in der Lage sind, an jedem Regal (5) anzukoppeln (100), Mittel (14) zum Identifizieren des Ziels jedes Frachtstücks (2), eine Zentraleinheit (7) zur Steuerung/Regelung, die in der Lage ist, individuell auf Entfernung die Beförderungsmittel (6) in geführter freier Bewegung zu steuern, umfassend einen Abfertigungsplan der Frachtstücke (2), der jedem Ziel eines Frachtstücks (2) eine Abfertigung zuordnet, und einen Verteilplan, der die Folge der Verteilung der Frachtstücke (2) angibt, umfasst, und
**dass** die Frachtstücke (2) nebeneinander und unter-/übereinander in jedem Segment (12) gelagert sind.

8. Zentrum (1) nach Anspruch 7, **dadurch gekennzeichnet, dass** jedes Regal (5) ein Tablett (50) aufweist, das zum Tragen eines einzigen Frachtstücks (2) ausgebildet ist, und einen Rahmen, der zum passieren lassen eines Beförderungsmittels (6) unter dem Tablett (50) ausgebildet ist, mit der Möglichkeit des Ankoppelns des Beförderungsmittels (6) an dem Rahmen bei Steuerbefehl der Zentraleinheit (7), wobei der Rahmen ausgebildet ist, um ein Regal (5) von verschiedenen Höhen und Breiten unterhalb oder oberhalb des Tabletts (50) hindurchgehen zu lassen und die Überlagerung der Frachtstücke (2) zu erlauben.

## Claims

1. A method of handling parcels (2) in a logistics center (1) for handling parcels (2), the method comprising the steps consisting in unloading the parcels (2) at an unloading point (3) of the center (1), in moving said parcels (2) and in stowing them in organized manner in various segments (12) of a stowage zone (11) of said center (1), each segment corresponding to a shipment of the parcels(2), and then in transferring said parcels (2) waiting for loading from each segment (12) to a loading point (3), said method being **characterized in that**, in order to move and in order to stow said parcels (2), it further consists in using racks (5) of the nesting type on legs and of different formats (heights and widths), suitable for nesting together by being superposed on one another, and in using independent self-propelled motor-driven shuttle carts (6) suitable for docking (100) with each rack (5), which shuttle carts are controlled individually and remotely to travel in freely guided manner, and **in that** it further comprises the steps consisting in:
• unloading (102) each parcel (2) onto a rack (5) of known format that is docked with and that is motor-driven by a shuttle cart (6);
• identifying (103) the destination of each parcel (2) ;
• using an outward shipping plan associating each destination of a parcel (2) with a shipment so as to allocate (104) a specific location of a segment (12) to said rack (5) carrying said parcel (2), taking account of the format of said rack (5) so as to enable said parcels (2) to be superposed, and causing said shuttle cart (6) to move (105) towards said specific location so as to store said parcels (2) side-by-side and in superposed manner; and
• using an inward delivery plan specifying the delivery sequence for said parcels (2) within the same shipment so as to cause a shuttle cart (6) to dock (110) with each rack (5) carrying a parcel (2) and so as to cause said parcel (2) to be transferred (111) from said stowage zone (11) to said loading point (3).

2. A handling method according to claim 1, **characterized in that** racks (5) are used that each have a tray (50) adapted to carry a single parcel (2), and a frame adapted to allow a shuttle cart (6) to fit under said tray (50) with it being possible for said shuttle cart (6) to dock with said frame on command, said frame being adapted to allow a rack (5) of different height and width to fit under or over said tray (50) and to enable said parcels (2) to be superposed.

3. A handling method according to claim 1, **characterized in that** racks (5) are used that each have a unique identifier, **in that** an associative table is established (103) between each unique identifier of a rack (5) and the destination of said parcel (2) that it is carrying so as to enable each parcel (2) to be located in said center (1) on the basis of said unique identifiers of the racks (5), and **in that** an allocation table is established (104) between each unique identifier of a rack (5) and said specific location that is allocated.

4. A handling method according to any preceding claim, **characterized in that**, before moving said shuttle cart (6) to said stowage zone (11), said shuttle cart (6) loaded with a parcel (2) is caused to move from said unloading point (3) to a service zone (15) of said center (1), in which zone at least one operation is performed that is chosen from the group comprising at least affixing a label to said parcel (2), weighing said parcel (2), inspecting said parcel (2), repairing said parcel (2), performing a security inspection on said parcel (2).

5. A handling method according to any preceding claim, **characterized in that** as many racks (5) are used as there are parcels (2) to be sorted.

6. A handling method according to any preceding claim, **characterized in that** a digital image is taken of each parcel and, on the basis of said digital image, said destination of said parcel is recognized.

7. A logistics center (1) for handling parcels (2), the logistics center comprising at least one unloading/loading point (3) for unloading/loading said parcels (2) and a stowage zone (11) that is designed to receive parcels (2) waiting for loading and that is subdivided into various segments (12), each of which corresponds to a shipment of the parcels (2), said logistics center being **characterized in that** it includes racks (5) of the nesting type on legs and of different formats (heights and widths), suitable for nesting together by being superposed on one another, and independent self-propelled motor-driven shuttle carts (6) suitable for docking (100) with each rack (5), identification means (14) for identifying the destination of each parcel (2), a monitoring and control central processing unit (7) that is suitable for individually and remotely controlling said shuttle carts (6) so that they travel in freely guided manner, and that has an outward shipping plan for shipment of said parcels (2), which plan associates each destination of a parcel (2) with a shipment, and an inward delivery plan specifying the delivery sequence for delivery of said parcels (2) within the same shipment, and **in that** said parcels (2) are stored side-by-side and in superposed manner in each segment (12).

8. A center (1) according to claim 7, **characterized in that** each rack (5) has a tray (50) adapted to carry a single parcel (2), and a frame adapted to allow a shuttle cart (6) to fit under said tray (50) with it being possible for said shuttle cart (6) to dock with said frame on command from said central processing unit (7), said frame being adapted to allow a rack (5) of different height and width to fit under or over said tray (50) and to enable said parcels (2) to be superposed.
